# EUROPÄISCHE PATENTSCHRIFT

(11) **EP 0 376 888 B1**
(45) Veröffentlichungstag und Bekanntmachung des Hinweises auf die Patenterteilung: **03.01.1996**
(21) Anmeldenummer: 89810973.1
(22) Anmeldetag: 21.12.1989
(51) Int. Cl.: A01N 49/00

(54) **Schädlingsbekämpfung**
Pest control
Lutte contre les parasites

(30) Priorität: 28.12.1988 CH 4825/88
(43) Veröffentlichungstag der Anmeldung: 04.07.1990
(73) Patentinhaber: CIBA-GEIGY AG, CH-4002 Basel (CH)
(72) Erfinder: Angst, Max, Dr., CH-4312 Magden (CH); Gugumus, François, Dr., CH-4123 Allschwil (CH); Rist, Günther, Dr., CH-4144 Arlesheim (CH); Vogt, Manfred, Dr., D-7880 Wallbach (DE); Rody, Jean, Dr., CH-4125 Riehen (CH)

(56) Entgegenhaltungen:
- WO-A-87/04591
- CHEMICAL ABSTRACTS, Band 101, Nr. 8, 20. August 1984, Columbus, Ohio, US; NITTO ELECTRIC INDUSTRIAL CO., LTD: "Production of controlled-release agrochemical films" Seite 235-6, Zusammenfassung-Nr. 67 821r

## Beschreibung

Die vorliegende Erfindung betrifft ein neuartiges pestizides Mittel zur Bekämpfung schädlicher Insekten und Vertreter der Ordnung Akarina, insbesondere solcher pflanzenschädigender Art, wobei eine das Verhalten der Schädlinge verändernde Substanz in biologisch wirksamer Menge freigesetzt wird.

Bei der Bekämpfung von Pflanzenschädlingen, insbesondere von Insekten und Spinnmilben, in landwirtschaftlichen Kulturen, vor allem in Monokulturen, ist man allgemein bestrebt, sowohl die zu schützenden Kulturpflanzen als auch deren Umgebung und den Boden, auf dem sie wachsen, sowenig wie möglich mit pestiziden Wirkstoffen in Berührung kommen zu lassen. Die zumeist an den Pflanzen befindlichen Schädlinge selbst sollen jedoch möglichst intensiv dem Wirkstoff ausgesetzt werden, sei es durch Kontakt-, Frassgift- oder Gasphasen-Wirkung. Weiterhin wird angestrebt, dass Nützlinge und Warmblüter durch die pestiziden Wirkstoffe nicht wesentlich beeinträchtigt werden. Um diese Ziele zu erreichen, wird erfindungsgemäss ein Mittel bzw. ein Bekämpfungsverfahren vorgeschlagen, bei dem im Prinzip das Verhalten der zu bekämpfenden Schädlinge mit Hilfe von Signalsubstanzen so spezifisch gesteuert oder gezielt verändert werden kann, dass die Schädlinge zu einer Quelle eines pestiziden Wirkstoffs hingeführt werden, die in separaten Bereichen innerhalb der zu schützenden Kulturfläche vorgesehen ist.

Von den verhaltensverändernden Substanzen wurden in der Praxis bisher hauptsächlich die Pheromone zur Früherkennung von Schädlingsbefall, zur Bekämpfung von Schädlingspopulationen durch Unterbrechung bzw. Störung des normalen Paarungsprozesses oder auch zum Fang von Schädlingen, hauptsächlich von Insekten, in Fallen verwendet (vgl. z.B. GB-PS 1.548.920 und GB-Patentanmeldung 2.063.068). Im allgemeinen müssen verhaltensverändernde Substanzen, insbesondere Pheromone, über einen längeren Zeitraum verzögert freigesetzt und vor Licht- sowie Witterungseinflüssen geschützt werden. So beschreibt die GB-Patentanmeldung 2,064,323 versprühbare, filmbildende, UV-Stabilisatoren und Anti-oxidantien enthaltende Massen, die Pheromone verzögert freisetzen und zur Bekämpfung von Insekten geeignet sein sollen (vgl. auch EP-PS 55 475). Aus der PCT-Anmeldung PCT/US 87/00243 ist es ferner bekannt, zur Bekämpfung von Spinnmilben eine das Verhalten der Schädlinge verändernde und verzögert freigesetzte Substanz in Kombination mit einem Mitizid in der üblichen Form einer Spritzbrühe auf die Blätter der zu behandelnden Pflanzen zu versprühen. Die Verteilung von fliessfähigen, copolymeren, pheromonhaltigen insektiziden Mitteln in Form von begrenzten Bereichen oder Tropfen, die das Pheromon verzögert freisetzen, wird in der GB-PS 2.141.932 beschrieben. Diese copolymeren Mittel können als aushärtende bzw. erhärtende dünne Filme oder Tropfen auf die Blätter der zu schützenden Pflanzen aufgebracht werden.

Mit Hilfe der vorstehend beschriebenen Mittel bzw. Anwendungstechniken ist es aber nicht möglich, die eingangs aufgezeigten erfindungsgemässen Ziele zu erreichen, weil bei den bekannten Pestizid-Lockstoff-Kombinationen entweder das gesamte zu schützende landwirtschaftliche Areal flächendeckend besprüht werden muss, oder weil die in separaten Bereichen aufgebrachten Mittel die verhaltensverändernde Substanzen nicht ausreichend lange freisetzen, oder weil sie keine genügende Wirksamkeit im Sinne einer tatsächlichen Abtötung der Schädlinge vermittels eines pestiziden Wirkstoffes gewährleisten. Auch genügen die bekannten Formulierungen, die in Tropfenform appliziert werden können (vgl. GB-PS 2.141.932), nicht den Anforderungen der Praxis in Bezug auf UV-Schutz, obwohl sie UV-Absorber, Antioxidantien, etc. enthalten. Es hat sich ferner gezeigt, dass bei bereits bekannten Mitteln dieser Art, die auf Polymerisat-Basis formuliert sind, oftmals phytotoxische Erscheinungen auftreten.

Die vorerwähnten Nachteile werden nun durch das erfindungsgemässe Mittel und Bekämpfungsverfahren überwunden. Gegenstand der Erfindung ist somit ein flüssiges Mittel zur Bekämpfung von schädlichen Insekten und Vertretern der Ordnung Acarina, welches mindestens eine pestizid wirksame Verbindung, eine oder mehrere Signalsubstanzen, ausgewählt aus der Gruppe, bestehend aus Pheromonen, Kairomonen und Lockstoffen, einen UV-Absorber oder ein UV-Absorbergemisch und gegebenenfalls einen oder mehrere Zusatzstoffe, ausgewählt aus der Gruppe, bestehend aus viskositätsregulierenden Verdickungsmitteln, Füllmaterialien, Lösungsmitteln und weiteren Formulierungshilfsstoffen, enthält, dadurch gekennzeichnet, dass das Mittel zu 51 bis 98 Gewichts% aus dem UV-Absorber oder UV-Absorbergemisch, zu 0,1 bis 10 Gewichts% aus der (den) pestizid wirksamen Verbindung(en) und zu 0,01 bis 30 Gewichts% aus der (den) Signalsubstanz(en) besteht und alle Bestandteile des Mittels mit Ausnahme der pestizid wirksamen Verbindung(en) und der Signalsubstanz(en) eine Matrix mit einer Viskosität zwischen 1000 und 40000 cp bilden.

Ein weiterer Gegenstand der Erfindung ist ein Verfahren zum Schutz vor dem Befall durch schädliche Insekten und Vertreter der Ordnung Acarina, dadurch gekennzeichnet, dass man ein Mittel gemäss der vorhergehenden Beschreibung innerhalb des vor dem Schädlthgsbefall zu schützenden Areals in Form einer vorherbestimmten Anzähl von Tröpfchen verteilt.

Ueberraschenderweise wurde gefunden, dass sich die vorliegenden Mittel bei guter Dauerwirkung, Pflanzenverträglichkeit und hoher Nützlingsschonung ausgezeichnet zur Schädlingsbekämpfung eignen. Dank des Einsatzes der erwähnten Signalsubstanzen bzw. Lockstoffe kann die Behandlung der zu schützenden Kulturflächen mit Insektiziden, die für Warmblüter und Nützlinge oftmals toxisch sind, mengenmässig erheblich eingeschränkt werden. Dieses auch vom ökologischen Standpunkt aus vorteilhafte neuartige Arbeitsverfahren beruht auf dem Konzept des integrierten Pflanzenschutzes, das bereits starke Beachtung gefunden habt. Wie erwähnt, zeichnen sich die erfindungsgemässen Formulierungen vor allem dadurch aus, dass sich sowohl die verhaltensverändernde Substanz als auch die pestizid wirksame Verbindung direkt in einem flüssigen bzw. fliessfähigen UV-Absorptionsmittel befinden. Dadurch wird ein optimaler und langanhaltender UV-Schutz vor allem der empfindlichen verhaltensverändernden Substanz erzielt.

Die erfindungsgemässen Mittel zeigen besondere Wirksamkeit vor allem bei der Bekämpfung von Pflanzen befallenden Insekten und Vertretern der Ordnung Akarina. Insbesondere eignen sich Mittel und Verfahren der Erfindung zur Bekämpfung von Insekten der Ordnungen: Lepidoptera, Goleoptera, Homoptera, Heteroptera, Diptera, Thysanoptera, Orthoptera, Anoplura, Siphonaptera, Mallophaga, Thysanura, Isoptera, Psocoptera und Hymenoptera, sowie von Vertretern der Ordnung Akarina der Familien: Ixodidae, Argasidae, Tetranychidae, Dermanyssidae, Tarsonemidae, Eriophydae, Tyroglyphidae und Glycyphagidae.

Die erfindungsgemässen Mittel werden bevorzugt zur Bekämpfung von pflanzenschädigenden Frassinsekten im Forst, in Zier- und Nutzpflanzungen, insbesondere in Baumwollkulturen (z.B. Pectinophora gossypiella, Spodoptera littoralis, Anthonomus grandis und Heliothis virescens), in Maiskulturen, in der Forstwirtschaft und im Weinbau eingesetzt. Die Mittel zeichnen sich durch eine ausgeprägte Wirkung, nicht nur gegen adulte Insekten, sondern auch gegen Larven, insbesondere von fressenden Schadinsekten, aus.

Die erfindungsgemässen Mittel können ferner auch zur Bekämpfung von Fliegen, z.B. Musca domestica und Stomoxys calcitrans, Mücken, sowie von unerwünschten Populationen anderer Insekten, z.B. Blatella germanica, aber auch von ektoparasitären Insekten, z.B. Lucilia sericata, die Haus-und Nutztiere schädigen, verwendet werden, z.B. durch Stall- und Weidebehandlung.

Die folgenden Schädlinge können beispielsweise mit Hilfe des erfindungsgemässen Mittels erfolgreich bekämpft werden:
Acleris spp.,
Adoxophyes fasciata,
Adoxophyes orana,
Aegeria apiformis,
Agriotes spp.,
Agrotis ipsilon,
Agrotis segetum,
Amylois transitella,
Anthonomus grandis,
Aonidiella aurantii,
Aonidiella citriana,
Archips spp.,
Argyrotaenia spp.,
Autographa spp.,
Blattella germanica,
Busseola fusca,
Cadra cautella,
Chilo partellus,
Chilo suppressalis,
Choristoneura fumiferana,
Choristoneura murinana,
Choristoneura rosaceana,
Choristoneura spp.,
Cnephasia spp.,
Cochylis spp.,
Coleophora laricella,
Coleophora spp.,
Cossus cossus,
Crocidolomia binotalis,
Curculio caryae,
Cydia pomonella,
Dacus dorsalis,
Dacus oleae,
Dacus spp.,
Dasychira spp.,
Dendroctonus brevicomis,
Dendroctonus frontalis,
Dendroctonus ponderosae,
Dendrolimus pini,
Dentroctonus spp.,
Dermestes spp.,
Diabrotica balteata,
Diabrotica longicornis,
Diabrotica vigifera,
Diabrotica barberi,
Diabrotica undecimpunctata,
Diatraea grandiosella,
Diatraea saccharalis,
Earias biplage,
Earias insulana,
Earias vittella,
Ephestia elutella,
Ephestia kuehniella,
Eucosma ponderosa,
Eucosma sonomana,
Eucosma spp.,
Eupoecilia ambiguella,
Euproctis similis xanthocampa,
Euxoa spp.,
Glossina morsitans morsitans,
Gnathotrichus spp.,
Grapholita funebrana,
Grapholita janthinana,
Grapholita molesta,
Grapholita prunivora,
Grapholita sp.,
Hedya nubiferana,
Heliothis armigera,
Heliothis spp.,
Heliothis virescens,
Heliothis zea,
Hylobius abietis,
Hylotrupes bajulus,
Ips paraconfusus,
Ips spp.,
Ips typographus,
Keiferia lycopersicella,
Leptinotarsa decemlineata,
Leucoptera scitella,
Lobesia botrana,
Lymantria dispar,
Lymantria monacha,
Lyonetia clerkella,
Malacosoma spp.,
Mamestra brassicae,
Manduca sexta,
Musca domestica,
Neodiprion sertifer,
Neodiprion spp.,
Operophtera brumata,
Ostrinia nubilalis,
Pammene rhediella,
Pammene spp.,
Pandemis spp.,
Pandemis heparana,
Panolis flammea,
Pectinophora gossypiella,
Pectinophora spp.,
Periplaneta americana,
Pityogenes chalcographus,
Pityokteines spp.,
Planococcus citri,
Platypus flavicoruis,
Plutella xylostella,
Popillia japonica,
Prays citri,
Prays oleae,
Pseudaulacaspis pentagona,
Pseudococcus comstocki,
Quadraspidiotus perniciosus,
Scolytus multistriatus,
Scolytus scolytus,
Scolytus spp.,
Sesamia spp.,
Sitotroga spp.,
Sparganothis pilleriana,
Sparganothis spp.,
Spodoptera exempta,
Spodoptera exigua,
Spotoptera frugiperda,
Spotoptera littoralis,
Spotoptera litura,
Spotoptera spp.,
Stomoxys calcitrans,
Synanthedon formicaeformis,
Synanthedon spp,
Tetranychus urticae,
Thaumetopoea pityocampa,
Tortrix viridana,
Trichoplusia ni,
Trogoderma granarium,
Trogoderma spp.,
Trypodendron domesticum,
Trypodendron lineatum,
Vespula spp.,
Yponomeuta spp.,
Zeiraphera diniana,
Zeuzera pyrina,
Tetranychus cinnabarinus, Panonychus ulmi, Bryobia rubrioculus, Panonychuis citri, Eriophyes pyri, Eriophyes ribis, Eriophyes vitis, Tarsomemus pallidus, Phyllocoptes vitis und Phyllocoptura oleivora.

Die gute pestizide Wirkung der erfindungsgemässen Mittel entspricht einer Abtötungsrate (Mortalität) von mindestens 50-60 % der erwähnten Schädlinge.

Als verhaltensverändernde Substanzen kommen für die Erfindung hauptsächlich Pheromone, aber auch Kairomone und Lockstoffe, in Betracht. Derartige Signal-Substanzen wirken schon in ausserordentlich geringen Konzentrationen und können das Verhalten der Insekten in einer ihre Bekämpfung ermöglichenden Weise verändern.

Pheromone werden in den erfindungsgemässen Mitteln dabei vorzugsweise in Mengenanteilen von 0,01 bis 2,0 Gew.-%, Kairomone und Lockstoffe, die zumeist in Mitteln zur Bekämpfung larvaler Stadien enthalten sind, in Mengenanteilen von 0,5 bis 30 Gew.-% eingesetzt.

Pheromone sind in den meisten Fällen von den weiblichen Adulten der Schädlinge, hauptsächlich von Insekten, produzierte Sexual-Signalstoffe, die die Individuen der gleichen Schädlings-Spezies von entgegengesetzem Geschlecht anziehen. Die natürlichen Pheromone und Pheromongemische sind flüchtig und können ihre Attraktionswirkung über weite Entfernungen entfalten. Für die Zwecke der Erfindung sind grundsätzlich alle in der Literatur beschriebenen Pheromone geeignet. Die Struktur und Zusammensetzung der Pheromone ist aus dem Schrifttum bekannt, vgl. z.B.: A.F. Kydoneus et al., "Insect Supression with Controlled Release Pheromone Systems", CRC Press (1982);
H. Arn et al., "List of Pheromones of Lepidoptera and Related Attractants", OILB (1986).

Im Rahmen der vorliegenden Erfindung können beispielsweise die folgenden Pheromone verwendet werden:
Z-5-Decenylacetat
Dodecanylacetat
Z-7-Dodecenylacetat
E-7-Dodecenylacetat
Z-8-Dodecenylacetat
E-8-Dodecenylacetat
Z-9-Dodecenylacetat
E-9-Dodecenylacetat
E-10-Dodecenylacetat
11-Dodecenylacetat
Z-9,11-Dodecadienylacetat
E-9,11-Dodecadienylacetat
Z-11-Tridecenylacetat
E-11-Tridecenylacetat
Tetradecanylacetat
E-7-Tetradecenylacetat
Z-8-Tetradecenylacetat
E-8-Tetradecenylacetat
Z-9-Tetradecenylacetat
E-9-Tetradecenylacetat
Z-10-Tetradecenylacetat
E-10-Tetradecenylacetat
Z-11-Tetradecenylacetat
E-11-Tetradecenylacetat
Z-12-Pentadecenylacetat
E-12-Pentadecenylacetat
Hexadecanylacetat
Z-7-Hexadecenylacetat
Z-11-Hexadecenylacetat
E-11-Hexadecenylacetat
Octadecanylacetat
E,Z-7,9-Dodecadienylacetat
Z,E-7,9-Dodecadienylacetat
E,E-7,9-Dodecadienylacetat
Z,Z-7,9-Dodecadienylacetat
E,E-8,10-Dodecadienylacetat
E,Z-9,12-Dodecadienylacetat
E,Z-4,7-Tridecadienylacetat
4-methoxy-cinnamaldehyd
β-Ionon
Estragol
Eugenol
Indol
8-Methyl-2-decyl-propanoat
E,E-9,11-Tetradecadienylacetat
Z,Z-9,12-Tetradecadienylacetat
Z,Z-7,11-Hexadecadienylacetat
E,Z-7,11-Hexadecadienylacetat
Z,E-7,11-Hexadecadienylacetat
E,E-7,11-Hexadecadienylacetat
Z,E-3,13-Octadecadienylacetat
E,Z-3,13-Octadecadienylacetat
E,E-3,13-Octadecadienylacetat
Aethanol
Hexanol
Heptanol
Octanol
Decanol
Z-6-Nonenol
E-6-Nonenol
Dodecanol
11-Dedecenol
Z-7-Dedecenol
E-7-Dedecenol
Z-8-Dedecenol
E-8-Dedecenol
E-9-Dedecenol
Z-9-Dedecenol
E-9,11-Dodecadienol
Z-9,11-Dodecadienol
Z,E-5,7-Dodecadienol
E,E-5,7-Dodecadienol
E,E-8,10-Dodecadienol
E,Z-8,10-Dodecadienol
Z,Z-8,10-Dodecadienol
Z,E-8,10-Dodecadienol
E,Z-7,9-Dodecadienol
Z,Z-7 9-Dodecadienol
E-5-Tetradecenol
Z-8-Tetradecenol
Z-9-Tetradecenol
E-9-Tetradecenol
Z-10-Tetradecenol
Z-11-Tetradecenol
E-11-Tetradecenol
Z-11-Hexadecenol
Z,E-9,11-Tetradecadienol
Z,E-9,12-Tetradecadienol
Z,Z-9,12-Tetradecadienol
Z,Z-10,12-Tetradecadienol
Z,Z-7,11-Hexadecadienol
Z,E-7,11-Hexadecadienol
(E)-14-Methyl-8-Hexadecen-1-ol
(Z)-14-Methyl-8-Hexadecen-1-ol
E,E-10,12-Hexadecadienol
E,Z-10,12-Hexadecadienol
Dodecanal
Z-9-Dodecenal
tetradecanal
Z-7-Tetradecenal
Z-9-Tetradecenal
Z-11-Tetradecenal
E-11-Tetradecenal
E-11,13-Tetradecadienal
E,E-8,10-Tetradecadienal
Z,E-9,11-Tetradecadienal
Z,E-9,12-Tetradecadienal
Hexadecanal
Z-8-Hexadecenal
Z-9-Hexadecenal
Z-10-Hexadecenal
E-10-Hexadecenal
Z-11-Hexadecenal
E-11-Hexadecenal
Z-12-Hexadecenal
Z-13-Hexadecenal
(Z)-14-Methyl-8-Hexadecenal
(E)-14-Methyl-8-Hexadecenal
Z,Z-7,11-Hexadecadienal
Z,E-7,11-Hexadecadienal
Z,E-9,11-Hexadecadienal
E,E-10,12-Hexadecadienal
E,Z-10,12-Hexadecadienal
Z,E-10,12-Hexadecadienal
Z,Z-10,12-Hexadecadienal
Z,Z-11,13-Hexadecadienal
Octadecanal
Z-11-Octadecenal
E-13-Octadecenal
Z-13-Octadecenal
Z-5-Decenyl-3-methyl-butanoat

- Disparlure:: (+) cis-7,8-Epoxy-2-methylocatadecan
- Seudenol:: 3-Methyl-2-cyclohexen-1-ol
- Sulcatol:: 6-Methyl-5-hepten-2-ol
- Ipsenol:: 2-Methyl-6-methylen-7-octen-4-ol
- Ipsdienol:: 2-Methyl-6-methylen-2,7-octadien-4-ol
- Grandlure I:: cis-2-Isopropenyl-1-methylcyclobutanäthanol
- Grandlure II:: Z-3,3,-Dimethyl-1-cyclohexanäthanol
- Grandlure III:: Z-3,3,-Dimethyl-1-cyclohexanacetaldehyd
- Grandlure IV:: E-3,3,-Dimethyl-1-cyclohexanacetaldehyd
- cis-2-Verbenol:: cis-4,6,6-Trimethylbicyclo[3.1.1]hept-3-en-2-ol
cucurbitacin
2-Methyl-3-buten-2-ol
4-Methyl-3-heptanol
Cucurbitacin
2-Methyl-3-buten-2-ol
4-Methyl-3-heptanol

- α-Pinen:: 2,6,6-Trimethylbicyclo[3.1.1]hept-2-en
- α-Caryophyllen:: 4,11,11-Trimethyl-8-methylenbicyclo[7.2.0]undecan Z-9-Tricosen
- α-Multistriatin: 2(2-endo,4-endo)-5-Ethyl-2,4-dimethyl-6,8-dioxabicyclo[3.2.1]octan
- Methyleugenol:: 1,2-Dimethoxy-4-(2-propenyl)phenol
- Lineatin:: 3,3,7-Trimethyl-2,9-dioxatricyclo[3.3.1.0]nonan
- Chalcogran:: 2-Aethyl-1-6-dioxaspiro[4.4]nonan
- Frontalin:: 1,5-Dimethyl-6,8-dioxabicyclo[3.2.1]octan
- endo-Brevicomin:: endo-7-Ethyl-5-methyl-6,8-dioxabicyclo[3.2.1]octan
- exo-Brevicomin:: exo-7-Ethyl-5-methyl-6,8-dioxabicyclo[3.2.1]octan (Z)-5-( 1-Decenyl)dihydro-2( 3H)-furanon
- Farnesol: 3,7-,11-Trimethyl-2,6,10-dodecatrien-1-ol
- Nerolidol: 3,7-,11-Trimethyl-1,6,10-dodecatrien-3-ol
3-Methyl-6-(1-methyläthenyl)-9-decen-1-ol-acetat
(Z)-3-Methyl-6-(1-methyläthenyl)-3, 9-decadien-1-ol-acetat
(E)-3,9-Methyl-6-(1-methyläthenyl)-5,8-decadien-1-ol-acetat
3-Methylen-7-methyl-octen-1-ol-propionat
(Z)-3,7-Dimethyl-2,7-octadien-1-ol-propionat
(Z)-3,9-Dimethyl-6-(1-methyläthenyl)-3,9-decadien-1-ol-propionat

Kairomone sind ebenfalls Signal-Substanzen natürlichen Ursprungs. Sie werden von Pflanzen erzeugt und bestehen meist aus einem Gemisch einer Vielzahl unterschiedlicher flüchtiger Duftstoffe. Die Kairomone vermögen Insekten und Vertreter der Ordnung Akarina anzuziehen. In Abhängigkeit von der Konzentration können aber auch Abstossungseffekte auftreten. Die Wirkung der Kairomone ist im Zusammenhang mit der Tatsache zu sehen, dass Insekten und Akarinen mit den betreffenden Pflanzen eine enge Lebensgemeinschaft bilden. Kairomone, die für die Zwecke der Erfindung in Betracht kommen, und deren Gewinnung werden beispielsweise in den folgenden Literaturstellen beschrieben:
Science, 154, 1392-93 (1966);
P.A. Hedin "Bioregulators for Pest Control", American Chemical Society, Washington, 353-366 (1985).

Bei den sogenannten Lockstoffen handelt es sich um bekannte chemische Verbindungen, die verhältnismässig leicht verfügbar sind, und auf Schädlinge verhaltensverändernde Effekte in dem Sinne ausüben können, dass diese der Wirkung von gleichzeitig vorliegenden Pestiziden in besonders hohem Masse ausgesetzt und zugänglich gemacht werden. Derartige Lockstoffe, die ebenfalls für die erfindungsgemässen Zwecke - bevorzugt in Kombination mit Pheromonen und/oder Kairomonen - verwendet werden können, sind beispielsweise aus den folgenden Literaturstellen ersichtlich:
G.R. Waller, "Allelochemicals: Role in Agriculture and Forestry", ACS, Washington, 431-438 (1987);
Entomol. exp. appl. 41, 11-16 (1986);
Can. Entomol. 115, 1-5 (1983).

In einer speziellen Ausführungsform der Erfindung enthält die Matrix die verhaltensverändernde Substanz in mikroenkapsulierter Form. Die verbaltensverändernde Substanz wird hierzu in an sich bekannter Weise in geeignete Polymerisate oder Mischpolymerisate synthetischen oder natürlichen Ursprungs eingekapselt und kann durch die Wände der Mikrokapseln verzögert bzw. kontrolliert freigesetzt werden. Durch die gewählte Art der Einkapselung, insbesondere der Art des polymeren Kapselmaterials sowie der Kapsel-Wandstärke und Kapselgrösse, ist es möglich, die Dauer der Freisetzung der verhaltensverändernden Substanz den jeweiligen Erfordernissen der landwirtschaftlichen Praxis anzupassen.

In einer weiteren Ausgestaltung der Erfindung kann man die verhaltensverändernde Substanz auch in ein Granulat einbringen, das diese verzögert freizusetzen imstande ist. Ebenso wie die vorstehend erwähnten Mikrokapseln befindet sich das Granulat in der Matrix und wird zusammen mit den anderen erfindungsgemäss vorgeschlagenen Wirkstoffen in Form von Tröpfchen bzw. tropfenähnlicher Bereiche verteilt. Die Granulate können aus kleinteiligen anorganischen Trägerstoffen und/oder organischen Polymeren bestehen, wie sie dem Fachmann geläufig sind.

In den erfindungsgemässen Mitteln und Zubereitungen werden als pestizid wirksame Verbindungen die zur Bekämpfung der betreffenden Schädlinge bekannten und geeigneten konventionellen insektiziden bzw. akariziden Wirkstoffe verwendet. Selbstverständlich müssen die pestiziden Wirkstoffe mit den übrigen Bestandteilen des fliessfähigen bzw. viskosen erfindungsgemässen Mittels verträglich und zumindestens in der Hauptsache darin löslich sein. Daher wird erfindungsgemäss flüssigen pestizid wirksamen Verbindungen der Vorzug gegeben. Die pestiziden Wirkstoffe dürfen auch nicht zu schnell verdunsten, sondern sollen während eines angemessenen Zeitraumes an bzw. auf der Oberfläche der ausgebrachten Tröpfchen bzw. tropfenförmigen Bereichen vorliegen, um die Aufnahme des Wirkstoffs durch den zu bekämpfenden Schädling zu ermöglichen. In diesem Sinne liegen in den erfindungsgemässen Mitteln bevorzugt pestizide Kontakt-Wirkstoffe vor. Die erfindungsgemässen Mittel enthalten vorzugsweise 1 bis 5 Gew.-%, der pestizid wirksamen Verbindung. Vertreter der folgenden pestiziden Wirkstoffklassen kommen für die Zwecke der Erfindung in Betracht: Carbamate, organische Phosphorverbindungen, Nitrophenole und Derivate, Formamidine, Harnstoffe, Phenylbenzoylharnstoffe, Pyrethroide, chlorierte Kohlenwasserstoffe und Bacillus thuringiensis-Präparate.

Bevorzugt enthalten die erfindungsgemässen Mittel als pestizid wirksame Verbindungsklassen Carbamate, organische Phosphorverbindungen, Pyrethroide und Insekten-Wachstumsregulatoren.

Geeignete Carbamate sind z.B.:

| | |
|---|---|
| CLOETOCARBB | BENDIOCARB |
| BPMC | CARBOFURAN |
| METHOMYL | CARBOSULFAN |
| BUFENCARB | PIRIMICARB |
| DIOXACARB | ISOPROCARB |
| THIODICARB | BENFURACARB |
| FURATHIOCARB | ALDICARB |
| NITRILACARB | CARBARYL |
| METHOMYL | THIODICARB |
| OXAMYL | |

Geeignete organische Phosphorverbindungen sind z.B.:

| | | |
|---|---|---|
| DIMETHOAT | PROFENOFOS | MALATHION |
| ZOLAPROFOS | AZAMETHIPHOS | CHLORPYRIFOS |
| AZINPHOS-METHYL | METHACRIFOS | CHLORPYRIFOS-M |
| SULPROFOS | CHLORFENVINPHOS | TRIAZOPHOS |
| METHYLPARATHION | PHOSPHAMIDON | ENDOSULFAN |
| PARATHION | DICROTOPHOS | PROPAPHOS |
| FENITROTHION | MONOCROTOPHOS | SULPROFOS |
| CARBOFURAN | DICHLORVOS | PIRIMIPHOS-M |
| TRICHLORPHON | DIMETILAN | PHOSALONE |
| PHOXIM | DIAZINON | VAMIDOTHION |
| ACEPHATE | METHIDATION | CHLORMEPHOS |
| METAMIDOPHOS | JODFENPHOS | FORMOTHION |
| ISAZOPHOS | DEMETON-S-METHYL | ETRIMIFOS |
| | | FONOFOS |

Geeignete Pyrethroide sind z.B.:

| | |
|---|---|
| BIORESMETHRIN | FENPROPATHRIN |
| CYPERMETHRIN | RESMETHRIN |
| CYHALOTHRIN | PHENOTHRIN |
| TEFLUTHRIN | FENVALERATE |
| PERMETHRIN | FENPROPATHRIN |
| DECAMETHRIN | FLUVALINATE |
| TRALOCYTRIN | |

Geeignete Insekten-Wachstumsregulatoren, die insbesondere zur Bekämpfung von larvalen Stadien eingesetzt werden, sind z.B.:
CHLORDIMEFORM
CYROMAZINE
CHLORFLUAZURON
BUPROFEZINE
DIFLUBENZURON
FLUFENOXURON
Für die Bekämpfung von Vertretern der Ordnung Akarina sind erfindungsgemäss z.B. die folgenden Akarizide geeignet:
CHLORBENZILAT
CHLORPROPHYLAT
BROMPROPHYLAT
AMITRAZ
HEXYTHIAZOX
ROTENON
DIPEL
Ein wesentliches Merkmal der vorliegenden Erfindung ist darin zu erblicken, dass die Matrix der erfindungsgemässen Mittel in der die biologisch wirksamen Komponenten, vorzugsweise gelöst oder in emulgierter Form, enthalten sind, zum grössten Teil aus einem an sich bekannten flüssigen UV-Absorptionsmittel besteht. Es hat sich herausgestellt, dass flüssige bzw. fliessfähige UV-Absorber mit einem Absorptionsbereich von 270 bis 400 nm für die Zwecke der Erfindung insbesondere deshalb geeignet sind, weil sie einerseits den erforderlichen Schutz der in den Mitteln enthaltenen biologischen Komponenten gegen Licht- und Witterungseinflüsse gewährleisten, und weil sie andererseits permanente Fliessfähig-keit-Eigenschaften besitzen. Dadurch ist es möglich, den Mitteln - gegebenenfalls unter Zusatz bestimmter viskositätsregulierender Stoffe -eine Konsistenz zu verleihen, die sie zur Verteilung in Form von Tröpfchen oder tropfenähnlichen Bereichen auf eine Unterlage geeignet macht, wobei die Unterlage bevorzugt das Laubwerk oder andere Teile der zu schützenden Pflanzen ist. Diese Tröpfchen bzw. tropfenähnlichen Bereiche, die jeweils in der Grössenordnung von 1 bis 100 µl, vorzugsweise 5 bis 40 µl, liegen, haften an der betreffenden Unterlage und setzen die darin enthaltene, das Verhalten der Schädlinge verändernde Substanz verzögert und kontrolliert über einen längeren Zeitraum frei. Aufgrund ihres unterschiedlichen biologischen, Mobilitäts- und Frass-Verhaltens werden larvale und adulte Schädlings-Stadien zweckmässigerweise durch Ausbringen von Tröpchen bzw. tropfenähnlichen Bereichen unterschiedlicher Grösse auf die befallenen Kulturflächen bekämpft, welche vorzugsweise 1 bis 20 µl für Larven und 30 bis 100 µl für Adulte beträgt. Im allgemeinen erfolgt die verzögerte bzw. kontrollierte Freisetzung der verhaltensverändernden Substanz in einem Zeitraum bis zu 15 Wochen, mindestens aber bis zu 6 Wochen. Wenn die angelockten Schädlinge mit dem permanent fliessfähigen bzw. viskosen Mittel in Berührung kommen, nehmen sie zwangsläufig von dessen Oberfläche eine pestizid wirksame Menge des in dem Mittel enthaltenen Insektizids bzw. Akarizids auf. Eine derartige gesteuerte Pestizid-Aufnahme ("attract-and-kill"-Effekt) ist z.B. bei Mitteln, die als lackähnliche Schicht oder feste und harte Polymerisate auf Unterlagen, z.B. auf Pflanzenteilen, haften, nicht gegeben.

Die erfindungsgemässen Mittel bestehen vorzugsweise zu 70 bis 98 Gew.-% aus der Matrix, d.h. dem UV-Absorber. Als zweckmässig hat es sich erwiesen, wenn die UV-Absorber von sich aus eine Viskosität von 1.000 bis 40.000 cp besitzen. Als erfindungsgemäss geeignete Klassen und Typen von UV-Absorbern kommen z.B. die folgenden in Betracht, soweit sie flüssig sind und den übrigen erfindungsgemässen Bedingungen entsprechen:

### 1. 2-(2-Hydroxyphenyl)-benztriazole:

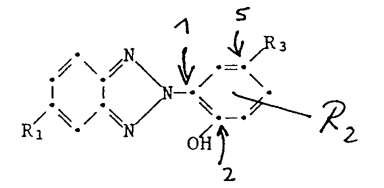

- R₁: = H, Cl;
- R₂: = H, Alkyl, Phenylalkyl, Phenyl;
- R₃: = Alkyl, Phenylalkyl, Phenyl, -(CH₂)₂-COO-Alkyl.

Bevorzugt werden folgende UV-Absorber dieses Typs:

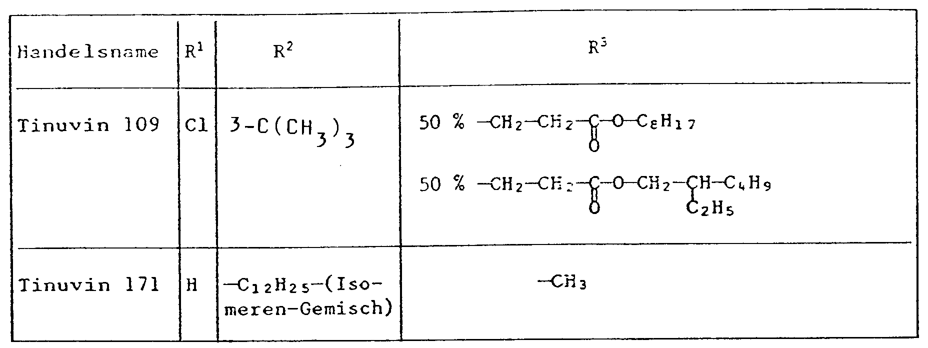

Weiterhin kommen folgende Verbindungen, welche ebenfalls als "Tinuvine" bezeichnet werden, in Frage

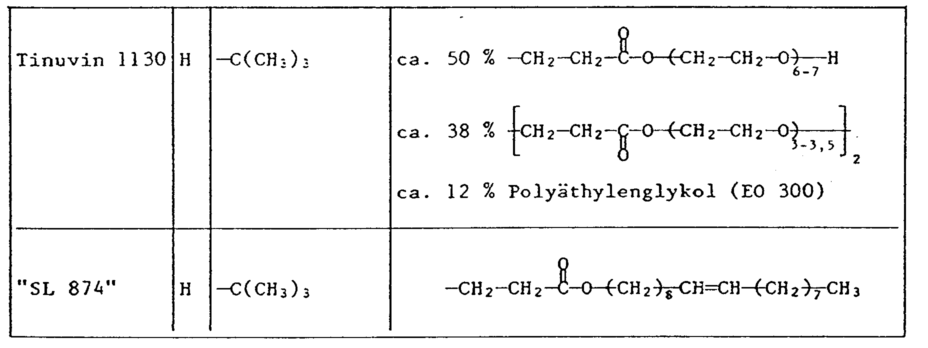

### 2. 2-Hydroxy-4-alkoxy-benzophenone:

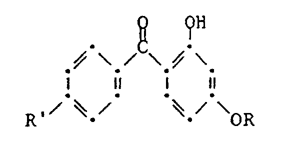

- R =: Alkyl (z.B. iso-C₈H₁₇, -C₁₂H₂₅)
- R' =: H, Alkyl, Alkoxy

### 3. Oxalanilide

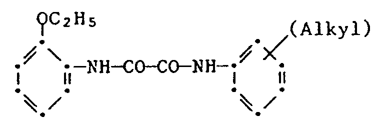

### 4. Zimtsäurederivate:

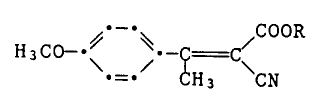

- R: = Alkyl (z.B. n-C₄H₉) 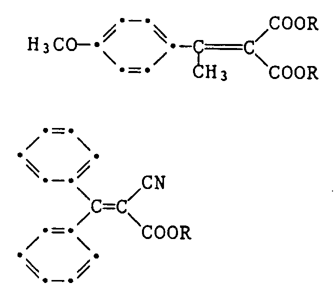
- R: = Alkyl

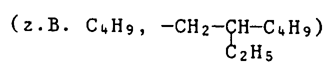

### 5. Triazinderivate:

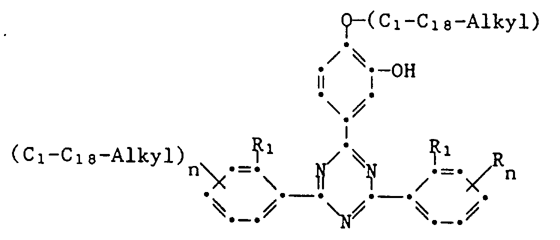

- R: = C₁-C₁₈-Alkyl, -O-(C₁-C₁₈-Alkyl)
- R₁: = H, OH
- n: = 0, 1 oder 2
Falls erforderlich, können in den erfindungsgemässen fliessfähigen Zubereitungen übliche viskositätsregulierende Verdickungsmittel in einer Menge von 1 bis 47 %, vorzugsweise in einer Menge von 1 bis 20 %, auf das Gewicht der Matrix bezogen, enthalten sein. Als organische Verdicker kommen z.B. in Betracht: mit Basen neutralisierte Acrylsäurepolymerisate von hohem Molekulargewicht und relativ hoher Viskosität ("Carbpole"-Typen), Polyvinylpyrrolidone, Cellulose-Gummen, insbesondere Cellulose-Alkylester und -Alkyläther ("Blanose"-Typen), flüssige Polyalkylenglykol-Blockmischpolymerisate aus Aethylenoxyd und Propylenoxyd ("Pluronic"-Typen) sowie Polyäthylenglykole mit einem Molekulargewicht von über 10.000. Unter den anorganischen Verdickern seien z.B. die folgenden genannt: gefällte oder pyrogene Kieselsäuren, Aluminiumoxyde und Gesteinsmehle, insbesondere Calcit, Talkumarten, Kaoline, Bentonite, Montmorillonite, Smectite und Attapulgit, Aluminiumoxid/Siliciumdioxid ("Aerosil"-Typen) und Natrium-Al-Silikate. Als zusätzliches Füllmaterial kann man den Zubereitungen Quarzsand oder vernetzte feste pulverförmige Polymerisate einverleiben.

Zur Abstimmung der Viskosität der erfindungsgemässen fliessfähigen Zubereitungen kann in bestimmten Fällen der Zusatz eines inerten Lösungs- bzw. Verdünnungsmittels zweckmässig sein. Diese Lösungsmittel sollten mit den übrigen Bestandteilen der Zubereitung verträglich und vorzugsweise nicht übermässig flüchtig sein. Geeignet sind z.B. die folgenden Lösungsmittel: schwerflüchtige Aether und ätherartige Verbindungen wie Dipropyläther, Dibutyläther, Dioxan, Dimethoxyäthan und Tetrahydrofuran; N,N-dialkylierte Carbonsäureamide; aliphatische, aromatische sowie halogenierte Kohlenwasserstoffe, insbesondere Pentane, Hexane, Heptane, Octane, Hexadecan, Toluol, Xylole, Chlorkohlenwasserstoffe und Chlorbenzole, Alkohole, wie Aethanol, Propanole, t-Butanol und höhere Alkohole; Nitrile, wie Acetonitril oder Propionitril; sowie Ketone, z.B. Methylisopropylketon und Methylisobutylketon; Alkylester aliphatischer Carbonsäuren, wie Propionsäurebutylester, Oxalsäuremethylester, Sebacinsäuredibutylester, Sebacinsäuredi-(2-äthylhexyl)-ester. Im allgemeinen sind nur relativ geringe Mengen an Lösungsmitteln in den erfindungsgemässen Formulierungen enthalten, z.B. 1 bis 2 Gew.-%.

Erforderlichenfalls können die erfindungsgemässen Mittel noch weitere Formulierungshilfsstoffe enthalten, welche der Anpassung der Mittel an spezielle Bedingungen dienen oder die darin enthaltenen biologischen Wirkstoffe gegen bestimmte Umweltbedingungen und -einflüsse schützen. Derartige Formulierungshilfsmittel können Substanzen sein, die einen zusätzlichen UV-Schutz gewährleisten, wie feinteilige Kohlepulver (z.B. Farbruss), Farbstoffe und Farbpigmente (z.B. Sudanschwarz, Chromophthalblau, Terasilblau, Cibacetgelb, Titandioxyd, Zinksulfat und Zinkoxyde), optische Aufheller (z.B. Uvitex oder Tinopal DMS), Antioxydantien (z.B. Tinuvin 765, Butylhydroxytoluol oder 2,6-Di-tert-butyl-p-kresol) und in einigen Fällen auch bestimmte oberflächenaktive Stoffe und Emulgatoren (z.B. anionische Tenside: Na-Laurylsulfat, Dodecylbenzolsulfonsäure-Ca-Salz sowie nichtionische Tenside: Fettalkoholäthoxylate, Alkylphenoläthoxylate, Oleylalkoholäthoxylate, Aethylenoxyd-Propylenoxyd-Blockcopolymere, Fettaminäthoxylate, Silikontenside). Kalk- und Farbpigmente können in den erfindungsgemässen Mitteln in einer Menge von 1 bis 20 Gew.-%, vorzugsweise 3 bis 10 Gew.-%, vorliegen, optische Aufheller in einer Menge von 0,1 bis 2 Gew.-%, Antioxydantien, wie beispielsweise Tinuvin 765 der Formel 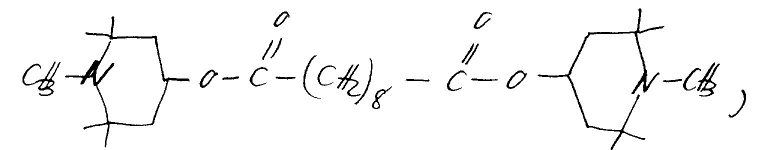
in einer Menge von 0,1 bis 5 Gew.-% und oberflächenaktive Stoffe und Emulgatoren in einer Menge von 0,1 bis 1 Gew.-%.

Im Rahmen des erfindungsgemässen Verfahrens zur Bekämpfung von pflanzenschädigenden Insekten und Vertretern der Ordnung Akarina können die erfindungsgemässen Mittel unter Verwendung konventioneller Vorrichtungen, wie sie dem Fachmann bekannt sind, in Form von Tröpfchen oder tropfenähnlichen Bereichen über die zu behandelnde landwirtschaftliche Kulturfläche verteilt werden. Für kleinere Bereiche haben sich z.B. automatische Pipetten mit entsprechenden Dosiervorrichtungen bewährt. Geeignet sind auch Anordnungen mit intermittierender, druckluftgesteuerter oder mechanisch gesteuerter Tropfenerzeugung, die hauptsächlich für ausgedehntere Flächenbereiche in Betracht kommen. Im Rahmen des erfindungsgemässen Verfahrens kann die Zahl der über die zu behandelnde Kulturfläche verteilten Tröpfchen oder tropfenförmigen Bereiche je nach der Art der zu bekämpfenden Schädlinge und deren Entwicklungsstadien unterschiedlich sein. Es können 50 bis zu 100'000'000 Tröpfchen oder tropfenförmige Bereiche pro 1000 m² der zu schützenden Kulturfläche verteilt werden, wobei im allgemeinen für die Bekämpfung von Adulten 50 bis 1000 und von Larven 500'000 bis 100'000'000 Tröpfchen oder tropfenförmige Bereiche der erfindungsgemässen Mittel verteilt werden.

Die nachfolgenden Beispiele erläutern die Erfindung, wobei sich die angegebenen %-Werte in den Formulierungen - wenn nicht anders angegeben - auf das Gewicht beziehen:

### Beispiel 1: Durch inniges Vermischen der folgenden Bestandteile wird eine fliessfähige Formulierung mit einer Viskosität von 25' 000 cp hergestellt:

| | |
|---|---|
| Tinuvin 171 (vgl. vorstehende Angaben) | 85,6 % |
| Farbruss-Pulver (Dichte 1,8-1,9 g/cm³, Teilchengrösse 20 nm, Oberfläche 240 m²/g) | 4,3 % |
| Aerosil COK 84 (feinteiliges SiO₂/Al₂O₃-84:16 Gew.-%) | 2,6 % |
| Furathiocarb | 4,3 % |
| Codlemon | 0,1 % |
| Hexan | 3,1 % |

Tropfen von jeweils 100 µl dieser Formulierung werden auf eine Aluminiumfolie aufgebracht und pro Tag abwechselnd während 9 Stunden einer UV-Bestrahlung (UV-Lampe) bei 35°C und während 15 Stunden in der Dunkelheit einer Temperatur von 12°C ausgesetzt. Tropfen unterschiedlicher Behandlungsdauer werden dann - unmittelbar nach dieser Behandlung - im sogenannten ''Windtunnel'' auf insektizide Wirkung und Lockwirkung gegenüber Cydia pomonella-Männchen geprüft.

Der verwendete Windtunnel, wie er im Prinzip bereits in der Literatur beschrieben wurde (vgl. J.R. Hiller und W.L. Roelofs, J. Chem. Ecology, 4, 187-198, 1978) besteht im wesentlichen aus einem geschlossenen Kanal aus durchsichtigem Material mit rechteckigem Querschnitt. An einer Endseite des Kanals wird ein Tropfen der Lockstoff-Insektizid-Formulierung wie vorstehend beschrieben, angeordnet. An der entgegengesetzten Endseite des Kanals werden kurze, offene Glasröhren zur Aufnahme der Insekten (Cydia pomonella-Männchen) sowie ein Abflug-Tisch angeordnet. Eine vorhande Lockwirkung des in dem Tropfen enthaltenen Lockstoffes, der mit einem erzeugten Luftstrom auf das Insekt in der Glasröhre trifft, verursacht bei den Männchen von Cydia pomonella einen Erregungszustand, der sich zunächst in Motorik und Schwirren der Falter mit den Flügeln äussert. Die Lockstoffquelle (d.h. der Tropfen mit der Wirksubstanz) wird dann von dem Abflug-Tisch aus gezielt angeflogen. Bei Substanzen ohne Lockwirkung bleibt der Falter regungslos in der offenen Glasröhre sitzen. Für jeden Flugversuch wird die Glasröhre mit jeweils einem Falter besetzt. Für jede zu prüfende Formulierung werden im Durchschnitt 40 Flugversuche durchgeführt. Zur Auswertung wird der Prozentsatz der Falter festgestellt, die in Richtung des Tropfens fliegen und diesen berühren ("Berührung"). Die Falter, die den Tropfen berühren, werden eingefangen und nach 24 Stunden wird deren %-Mortalität bestimmt. Die erhaltenen Ergebnisse gegenüber Kontrollansätzen ohne Lockstoff gehen aus der folgenden Tabelle hervor:

| Wirkung auf C. pomonella | Behandlungsdauer der Tropfen (in Tagen) | | | | |
|---|---|---|---|---|---|
| | 0 | 3 | 7 | 14 | 21 |
| %-Berührung | 95 | 85 | 95 | 95 | 80 |
| %-Mortalität | 100 | 100 | 100 | 100 | 100 |

### Beispiel 2: Entsprechend dem vorhergehenden Beispiel 1 wird aus den folgenden Bestandteilen eine Formulierung mit einer Viskosität von 20'000 cp hergestellt:

| | |
|---|---|
| Tinuvin 171 | 85,5 % |
| Farbruss-Pulver (Teilchengrösse 35 nm, Oberfläche 1000 m²/g) | 4,3 % |
| Sudanschwarz B (Farbstoff) | 4,3 % |
| Furathiocarb | 4,3 % |
| Codlemon | 0,2 % |
| Hexan | 1,4 % |

Tropfen von 100 µl dieser Formulierung werden im Feld auf die Blätter von Apfelbäumen appliziert und nach 35 Tagen im Windtunnel geprüft. Dabei zeigen diese Tropfen im Windtunnel noch eine sehr gute Lockwirkung und insektizide Wirksamkeit. 80 % der getesteten Männchen von Cydia pomonella werden von einem solchen Tropfen angelockt, fliegen ihn an und berühren ihn. Nach 24 Stunden beträgt die Mortalität dieser Männchen 100 %. Die Windtunnel-Versuche werden wie in Beispiel 1 angegeben durchgeführt.

### Beispiel 3: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 81,5 % |
| Aerosil COK 84 | 3,2 % |
| Farbruss-Pulver | 4,1 % |
| Sudanschwarz B | 4,1 % |
| Furathiocarb | 4,1 % |
| Codlemon | 0,1 % |
| Hexan | 2,9 % |

In einem Feldversuch mit dem Apfelwickler Cydia pomonella wird eine Obstanlage mit ca. 1200 Apfelbäumen von 1,2 ha mit 8 Tropfen von je 100 µl der obigen fliessfähigen Formulierung pro Baum (ca. 8000 Tropfen/ha) behandelt. Eine zweite entsprechend Applikation mit dieser Formulierung erfolgt 41 Tage später. Der Befall in der behandelten Anlage im Vergleich zu einer unbehandelten Kontrollanlage zeigt die folgenden Werte:

| Bonitierungszeitpunkt (Anzahl Tage nach der 1. Applikation) | %-Befall mit C. pomonella | |
|---|---|---|
| | behandelt | unbehandelt |
| 46 | 0,6 % | 7 % |
| 87 | 0,8 % | 22 % |

### Beispiel 4: Entsprechend dem vorliegenden Beispiel 1 wird aus den folgenden Bestandteilen eine viskose Formulierung hergestellt:

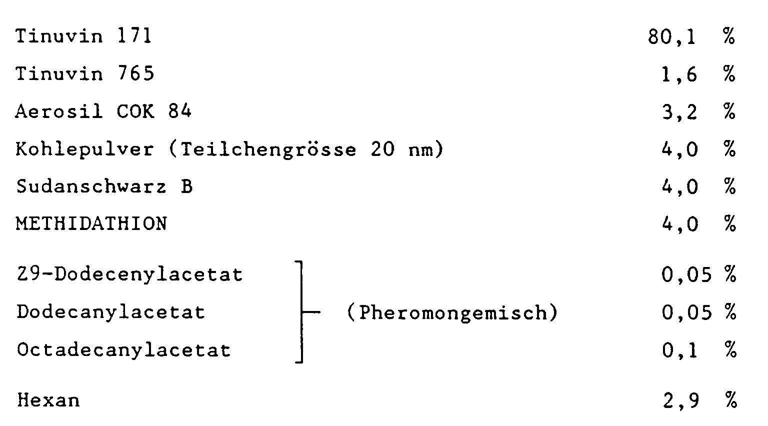

Die hergestellte Formulierung wird entsprechend der im Beispiel 1 beschriebenen Arbeitsweise im Windtunnel gegen Männchen von Eupoecilia ambiguella getestet. Die Auswertung ergibt mit Tropfen der obigen Formulierung, die 7 Tage wie in Beispiel 1 beschrieben behandelt worden waren, eine Mortalität von 75 bis 100 %.

### Beispiel 5: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 81,2 % |
| Aerosil COK 84 | 3,2 % |
| Farbrusspulver | 4,0 % |
| Sudanschwarz B | 4,0 % |
| Furathiocarb | 4,5 % |
| Hexan | 3,0 % |
| Pheromon | 0,1 % |

| Zusammensetzung des verwendeten Pheromons: | Gew.-Anteile: |
|---|---|
| (Z)9-Tetradecenylacetat | 9 |
| (Z)11-Tetradecanylacetat | 1 |
| (Z)9-Tetradecenol | 1 |
| (Z)11-Tetradecenol | 0,2 |

In einem Feldversuch mit dem Schalenwickler Adoxophyes reticulana wird 1 Tropfen von 100 µl der Formulierung in die Mitte eines mit Leim (Polybutylene) beschichteten Papierblattes von 16 x 16 cm gegeben. Das Papier wird um einen ca. 5 cm dicken Ast eines Apfelbaumes, ca. 2 m über dem Boden, befestigt und die auf dem Leimpapier gefangenen Falter, die vom Formulierungstropfen angelockt werden, wöchentlich gezählt. Als Kontrolle dient ein mit der gleichen Menge Pheromon behandelter Gummizapfen, der ebenfalls in der Mitte eines Leimpapieres befestigt wird. Pro Variante wurden 6 Wiederholungen vorgenommen:

| Bonitierungszeitpunkt (Anzahl Tage nach dem Ausbringen) | Anzahl gefangene Falter (Fangperiode 1 Woche, 6 Fallen) | |
|---|---|---|
| | Formulierung | Gummizapfen (Kontrolle) |
| 14 | 67 | 7 |
| 70 | 17 | 6 |

### Beispiel 6: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 81,2 % |
| Aerosil COK 84 | 3,2 % |
| Farbrusspulver | 4,0 % |
| Sudanschwarz B | 4,0 % |
| Furathiocarb | 4,5 % |
| Hexan | 3,0 % |
| Pheromon | 0,1 % |

| Zusammensetzung des verwendeten Pheromons: | Gew.-Anteile: |
|---|---|
| (Z)9-Dodecenylacetat | 1 |
| Dodecanylacetat | 1 |
| Octadecanylacetat | 2 |

In einem Feldversuch mit dem Traubenwickler Eupoecilia ambiguella wird 1 Tropfen von 100 µl in die Mitte eines mit Leim (Polybutylene) beschichteten Papierblattes von 16 x 16 cm gegeben. Das Papier wird auf Augenhöhe um eine Rebe festgemacht und die auf dem Leimpapier gefangenen Falter, die vom Formulierungstropfen angelockt werden, wöchentlich gezählt. Als Kontrolle dient ein mit der gleichen Menge Pheromon behandelter Gummizapfen, der ebenfalls in der Mitte eines Leimpapieres befestigt wird. Pro Variante wurden 6 Wiederholungen vorgenommen:

| Bonitierungszeitpunkt (Anzahl Tage nach dem Ausbringen) | Anzahl gefangene Falter (Fangperiode 1 Woche, 6 Fallen) | |
|---|---|---|
| | Formulierung | Gummizapfen (Kontrolle) |
| 14 | 19 | 17 |

### Beispiel 7: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 83,6 % |
| Aerosil COK 84 | 3,3 % |
| Farbrusspulver | 4,2 % |
| Sudanschwarz B | 4,2 % |
| Deltamethrin | 4,2 % |
| Hexan | 0,4 % |
| Pheromon | 0,2 % |

| Zusammensetzung des verwendeten Pheromons: | Gew.-Anteile: |
|---|---|
| Z,Z-7,11-Hexadecadienylacetat | 1 |
| Z,E-7,11-Hexadecadienylacetat | 1 |

In einem Feldversuch mit dem Pink Bollworm (Pectinophora gossypiella) wird Baumwolle auf einer Fläche von 0,75 ha mit Tropfen von je 50 µl der obigen Formulierung (ca. 10'000 Tropfen/ha) behandelt. Die Wirkung wird als Prozentsatz der von Larven befallenen Kapseln bestimmt. Der Befall der behandelten Anlage im Vergleich zu einer unbehandelten Kontrollparzelle ergibt folgende Werte:

| Bonitierungszeitpunkt (Anzahl Tage nach der Applikation) | %-Befall mit P. gossypiella | |
|---|---|---|
| | behandelt | unbehandelt (Kontrolle) |
| 30 | 0,14 % | 3,3 % |

### Beispiel 8: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 85,4 % |
| Aerosil COK 84 | 3,4 % |
| Farbrusspulver | 4,3 % |
| Sudanschwarz B | 4,3 % |
| Deltamethrin | 0,9 % |
| Hexan | 1,5 % |
| Pheromon | 0,2 % |

| Zusammensetzung des verwendeten Pheromons: | Gew.-Anteile: |
|---|---|
| (+)cis-2-Isopropenyl-1-methylcyclobutanäthanol | 40 |
| (Z)-3,3-Dimethyl-Δ-1,β-cyclohexanäthanol | 30 |
| (Z)-3,3-Dimethyl-Δ-1,α-cyclohexanacetaldehyd | 15 |
| (E)-3,3-Dimethyl-Δ-1,α-cyclohexanacetaldehyd | 15 |

Tropfen von je 100 µl werden auf eine Aluminumfolie gegeben und während 3 Tagen unter einer UV Lampe exponiert. Anschliessend werden Adulte Anthonomus grandis mit der Formulierung für kurze Zeit in Berührung gebracht, und nach 24 Stunden wird die Moralität beobachtet.

Als Kontrolle dient eine analoge Formulierung ohne Deltamethrin.

| Exposition der Formulierung (Anzahl Tage unter UV) | % Mortalität von A. grandis 24 h nach Exposition | |
|---|---|---|
| | behandelt | unbehandelt (Kontrolle) |
| 3 | 100 % | 5 % |

### Beispiel 9: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 83,7 % |
| Aerosil COK 84 | 3,4 % |
| Farbrusspulver | 4,3 % |
| Sudanschwarz B | 4,3 % |
| Methidathion | 2,7 % |
| Hexan | 1,5 % |
| 8-Methyl-2-decanolpropanoat (Pheromon) | 0,1 % |

Tropfen von je 100 µl werden auf eine Aluminiumfolie gegeben und während 5 Tagen unter einer UV Lampe exponiert. Anschliessend werden Adulte Diabrotica balteata mit der Formulierung für kurze Zeit in Berührung gebracht, und nach 24 Stunden wird die Mortalität beobachtet.

Als Kontrolle dient eine analoge Formulierung ohne Methidathion.

| Exposition der Formulierung (Anzahl Tage unter UV) | % Mortalität von D. balteata 24 h nach Exposition | |
|---|---|---|
| | behandelt | unbehandelt (Kontrolle) |
| 5 | 100 % | 0 % |

### Beispiel 10: Entsprechend dem vorliegenden Beispiel 1 wird aus den folgenden Bestandteilen eine Formulierung mit einer Viskosität von 20'000 cp hergestellt:

| | |
|---|---|
| Tinuvin 171 | 85,4 % |
| Aerosil COK 84 | 3,4 % |
| Farbrusspulver | 4,3 % |
| Sudanschwarz B | 4,3 % |
| Cypermethrin | 0,9 % |
| Hexan | 1,5 % |
| Estragol | 0,1 % |
| 4-Methoxy-cinnamaldehyd (Pheromon) | 0,1 % |

Tropfen von je 100 µl werden auf eine Aluminumfolie gegeben und während 4 Tagen unter einer UV Lampe exponiert. Anschliessend werden Adulte Diabrotica balteata mit einem Bein mit der Formulierung für kurze Zeit in Berührung gebracht. Nach 24 Stunden wird die Mortalität beobachtet. Als Kontrolle dient eine analoge Formulierung ohne Cypermethrin.

| Exposition der Formulierung (Anzahl Tage unter UV) | % Mortalität von D. balteata 24 h nach Exposition | |
|---|---|---|
| | behandelt | unbehandelt (Kontrolle) |
| 4 | 100 % | 0 % |

### Beispiele 11 bis 19: Die folgenden Formulierungen werden, wie in Beispiel 1 beschrieben, hergestellt und gemäss den in den Beispielen 1 bis 3 beschriebenen Methoden gegen Cydia pomonella getestet, wobei Mortalitätsraten von 75 bis 100 % erzielt werden:

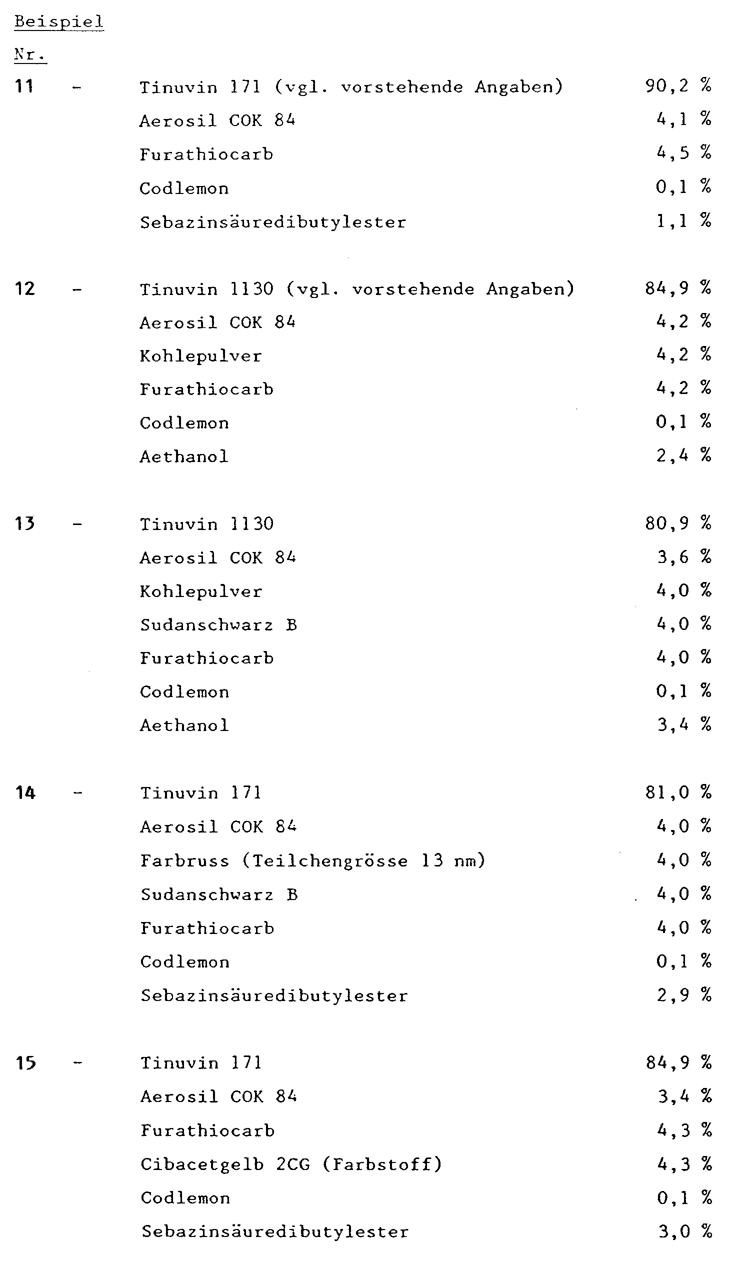

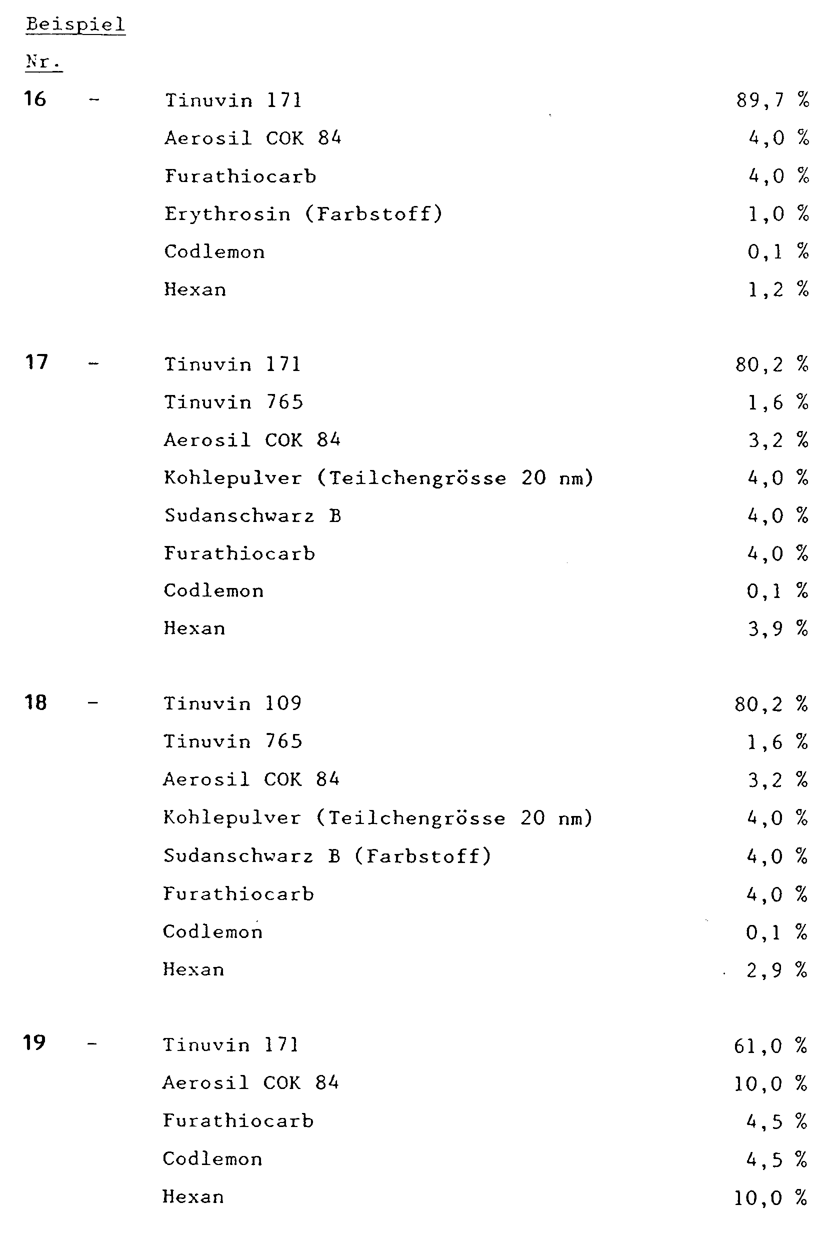

## Patentansprüche

1. Flüssiges Mittel zur Bekämpfung von schädlichen Insekten und Vertretern der Ordnung Acarina, welches mindestens eine pestizid wirksame Verbindung, eine oder mehrere Signalsubstanzen, ausgewählt aus der Gruppe, bestehend aus Pheromonen, Kairomonen und Lockstoffen, einen UV-Absorber oder ein UV-Absorbergemisch und gegebenenfalls einen oder mehrere Zusatzstoffe, ausgewählt aus der Gruppe, bestehend aus viskositätsregulierenden Verdickungsmitteln, Füllmaterialien, Losungsmitteln und weiteren Formulierungshilfsstoffen, enthält, dadurch gekennzeichnet, dass das Mittel zu 51 bis 98 Gewichts% aus dem UV-Absorber oder UV-Absorbergemisch, zu 0,1 bis 10 Gewichts% aus der (den) pestizid wirksamen Verbindung(en) und zu 0,01 bis 30 Gewichts% aus der (den) Signalsubstanz(en) besteht und alle Bestandteile des Mittels mit Ausnahme der pestizid wirksamen Verbindung(en) und der Signalsubstanz(en) eine Matrix mit einer Viskosität zwischen 1000 und 40000 cp bilden.

2. Mittel gemäss Anspruch 1, dadurch gekennzeichnet, dass die Matrix aus einem flüssigen UV-Absorptionsmittel mit einem Absorptionsbereich von 270 bis 400 nm besteht.

3. Mittel gemäss Anspruch 1 oder 2, dadurch gekennzeichnet, dass die Matrix ein die 2-H-Benzotriazolylgruppe aufweisendes UV-Absorptionsmittel enthält.

4. Mittel gemäss einem der Ansprüche 1 bis 3, dadurch gekennzeichnet, dass es sich beim UV-Absorber um die Verbindung der Formel 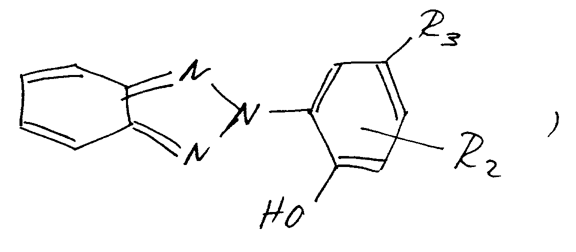 worin
R₂ ein -C₁₂H₅- Isomerengemisch und
R₃ Methyl ist,
handelt.

5. Mittel gemäss einem der Ansprüche 1 bis 4, dadurch gekennzeichnet, dass es zu 70 bis 98 Gew.-% aus der Matrix besteht.

6. Mittel gemäss einem der Ansprüche 1 bis 5, dadurch gekennzeichnet, dass die Matrix viskositätsregulierende Verdickungsmittel bzw. Lösungsmittel sowie Antioxydationsmittel, Farbstoffe bzw. -pigmente, optische Aufheller, Haftmittel oder oberflächenaktive Substanzen enthält.

7. Mittel gemäss einem der Anspüche 1 bis 6, dadurch gekennzeichnet, dass die Matrix 1 bis 47 Gew.-% eines viskositätsregulierenden Verdickungs- bzw. Lösungsmittels enthält.

8. Mittel gemäss einem der Ansprüche 1 bis 7, dadurch gekennzeichnet, dass es als zusätzliches UV-Absorptionsmittel feinteiligen Kohlenstoff enthält.

9. Mittel gemäss einem der Ansprüche 1 bis 8, dadurch gekennzeichnet, dass die verhaltensverändernde Substanz in mikroenkapsulierter Form mit kontrollierten Freisetzungs-Eigenschaften in der Matrix enthalten ist.

10. Mittel gemäss einem der Ansprüche 1 bis 9, dadurch gekennzeichnet, dass es als verhaltensverändernde Substanz 0,01 bis 2,0 Gew.-% eines Pheromons enthält.

11. Mittel gemäss Anspruch 10, dadurch gekennzeichnet, dass es das Pheromon Codlemon enthält.

12. Verfahren zum Schutz vor dem Befall durch schädliche Insekten und Vertreter der Ordnung Acarina, dadurch gekennzeichnet, dass man ein Mittel wie in einem der Ansprüche 1 bis 11 beschrieben innerhalb des vor dem Schädlingsbefall zu schützenden Areals in Form einer vorherbestimmten Anzahl von Tröpfchen verteilt.

13. Verfahren gemäss Anspruch 12, dadurch gekennzeichnet, dass man das Mittel auf einer landwirtschaftlichen Kulturfläche verteilt.

14. Verfahren gemäss Anspruch 13, dadurch gekennzeichnet, dass man das Mittel in Form von an einer Unterlage haftfähigen Tröpfchen bzw. tropfenähnlichen Bereichen in der Grössenordnung von 1 bis 100 µl gleichmässig über die zu schützende Kulturfläche verteilt.

15. Verfahren gemäss Anspruch 13 oder 14, dadurch gekennzeichnet, dass man 50 bis 100'000'000 Tröpfchen bzw. tropfenähnliche Bereiche pro 1000 m² über die zu schützenden Kulturfläche verteilt.

16. Verfahren gemäss einem der Ansprüchen 13 bis 15, dadurch gekennzeichnet, dass man die Tröpfchen bzw. tropfenähnlichen Bereiche auf die zu schützenden Pflanzen aufbringt.

## Claims

1. A liquid composition for controlling harmful insects and representatives of the order Acarina, comprising at least one pesticidally active compound, one or more signal substances selected from the group consisting of pheromones, kairomones and attractants, a UV absorber or a UV absorber mixture and optionally one or more additives selected from the group consisting of viscosity-regulating thickeners, fillers, solvents and other formulation auxiliaries, wherein from 51 to 98 % by weight of the composition consists of the UV absorber or UV absorber mixture, from 0.1 to 10 % by weight consists of the pesticidally active compound(s) and from 0.01 to 30 % by weight consists of the signal substance(s), and all of the components of the composition, with the exception of the pesticidally active compound(s) and the signal substance(s), form a matrix having a viscosity of from 1000 to 40 000 cp.

2. A composition according to claim 1, wherein the matrix consists of a liquid UV absorbent having an absorption range of from 270 to 400 nm.

3. A composition according to claim 1 or 2, wherein the matrix comprises a UV absorbent containing a 2-H-benzotriazolyl group.

4. A composition according to any one of claims 1 to 3, wherein the UV absorber is the compound of formula 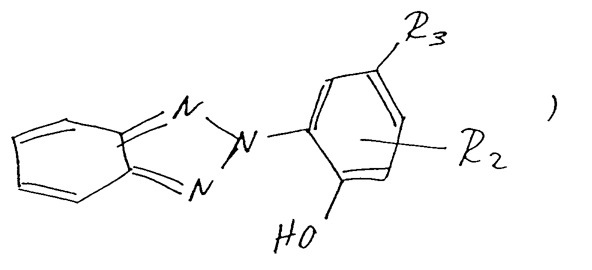 wherein
R₂ is a mixture of -C₁₂H₅- isomers and
R₃ is methyl.

5. A composition according to any one of claims 1 to 4, of which from 70 to 98 % by weight consists of the matrix.

6. A composition according to any one of claims 1 to 5, wherein the matrix comprises viscosity-regulating thickeners or solvents and also antioxidants, dyestuffs or colouring pigments, optical brighteners, tackifiers or surface-active substances.

7. A composition according to any one of claims 1 to 6, wherein the matrix contains from 1 to 47 % by weight of a viscosity-regulating thickener or solvent.

8. A composition according to any one of claims 1 to 7, which comprises as additional UV absorbent finely particulate carbon.

9. A composition according to any one of claims 1 to 8, wherein the behaviour-modifying substance is contained in the matrix in microencapsulated form having controlled release properties.

10. A composition according to any one of claims 1 to 9, which comprises as behaviour-modifying substance from 0.01 to 2.0 % by weight of a pheromone.

11. A composition according to claim 10, which comprises the pheromone Codlemon.

12. A method of protecting against attack by harmful insects and representatives of the order Acarina, which comprises distributing within the area to be protected against pest attack a composition as described in any one of claims 1 to 11 in the form of a predetermined number of droplets.

13. A method according to claim 12 which comprises distributing the composition over an agricultural crop area.

14. A method according to claim 13 which comprises distributing the composition uniformly over the crop area to be protected in the form of droplets or droplet-like spots that adhere to a substrate and are of the order of magnitude of from 1 to 100 µl.

15. A method according to either claim 13 or claim 14 which comprises distributing over the crop area to be protected from 50 to 100 000 000 droplets or droplet-like spots per 1000 m².

16. A method according to any one of claims 13 to 15 which comprises applying the droplets or droplet-like spots to the plants to be protected.

## Revendications

1. Agent liquide pour combattre les insectes, parasites et représentants de l'ordre des acariens, qui contient au moins un composé à action pecticide, une ou plusieurs substances signal choisis dans le groupe constitué par les phéromones, les kaïromones et les substances attractives, un absorbant d'UV ou un mélange d'absorbants d'UV et éventuellement un ou plusieurs additifs choisis dans le groupe constitué par les épaississants, régulateurs de viscosité, les charges, les solvants et d'autres additifs de formulation, caractérisé en ce que l'agent contient jusqu'à 51 à 98% en poids d'absorbant ou mélanges d'absorbants d'UV, jusqu'à 0,1 à 10% en poids de composés à action pesticide et de 0,01 à 30% en poids de substances signal et en ce que tous les composants de l'agent à l'exception du ou des composés à action pesticide et de la ou des substances signal forment une matrice ayant une viscosité comprise 1000 et 40 000 cp.

2. Agent selon la revendication 1, caractérisé en ce que la matrice se compose d'un absorbant d'UV liquide ayant un intervalle d'absorption de 270 à 400 nm.

3. Agent selon la revendication 1 ou 2, caractérisé en ce que la matrice contient un absorbant d'UV présentant le groupe 2-H-benzotriazolyle.

4. Agent selon l'une des revendications 1 à 3, caractérisé en ce qu'il s'agit; en ce qui concerne l'absorbant d'UV, du composé de formule 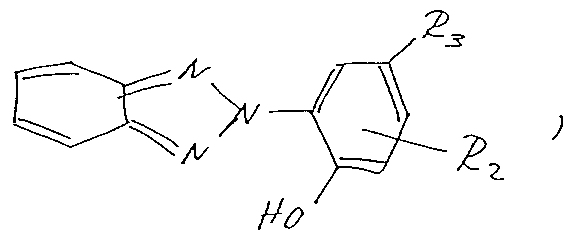 dans laquelle
R₂ est un mélange d'isomères en C₁₂H₅ et
R₃ est un méthyle.

5. Agent selon l'une des revendications 1 à 4, caractérisé en ce qu'il se compose la matrice à raison de 70 à 98% en poids.

6. Agent selon l'une des revendications 1 à 5, caractérisé en ce que la matrice contient des épaississants ou des solvants régulateurs de viscosité ainsi que les anti-oxydants, les colorants ou les pigments, les éclaircissants optiques, les colles ou les substances tensioactives.

7. Agent selon l'une des revendications 1 à 6, caractérisé en ce que la matrice contient de 1 à 47% en poids d'un épaississant ou solvant régulateur de viscosité.

8. Agent selon l'une des revendications 1 à 7, caractérisé en ce qu'il contient comme absorbant d'UV supplémentaire du carbone finement divisé.

9. Agent selon l'une des revendications 1 à 8, caractérisé en ce que la substance modificatrice de comportement est contenue dans la matrice sous forme micro-encapsulée avec des propriétés de libération contrôlées.

10. Agent selon l'une des revendications 1 à 9, caractérisé en ce qu'il contient comme substance modificatrice de comportement de 0,01 à 2,0% en poids d'une phéromone.

11. Agent selon la revendication 10, caractérisé en ce qu'il contient la phéromone Codlemon.

12. Procédé de protection contre l'attaque par les insectes parasites et les représentants de l'ordre des acariens caractérisé en ce qu'on disperse un agent tel que décrit dans les revendications 1 à 11, à l'intérieur de la zone a protéger contre l'attaque par les parasites sous la forme d'un nombre prédéterminé de gouttelettes.

13. Procédé selon la revendication 12, caractérisé en ce qu'on disperse l'agent sur une surface agricole cultivée.

14. Procédé selon la revendication 13, caractérisé en ce qu'on disperse l'agent sous forme de gouttelettes ou de matière semblable à des gouttes adhérant à un substrat, d'un ordre de grandeur de 1 à 100 µl, de façon régulière sur la surface cultivée à protéger.

15. Procédé selon la revendication 14, caractérisé en ce qu'on disperse de 50 à 1 000 000 de gouttelettes ou de matières semblables à des gouttes pour 1000 m² sur la surface cultivée à protéger.

16. Procédé selon la revendication 13 à 15, caractérisé en ce qu'on dépose les gouttelettes ou les matières semblables à des gouttelettes sur les plantes à protéger.
